Europäisches Patentamt

European Patent Office

Office européen des brevets

(19)

(11) **EP 1 159 634 B1**

(12) **FASCICULE DE BREVET EUROPEEN**

(45) Date de publication et mention
de la délivrance du brevet:
**19.05.2004 Bulletin 2004/21**

(21) Numéro de dépôt: **00909418.6**

(22) Date de dépôt: **03.03.2000**

(51) Int Cl.$^7$: **G01S 5/04**

(86) Numéro de dépôt international:
**PCT/FR2000/000535**

(87) Numéro de publication internationale:
**WO 2000/052493 (08.09.2000 Gazette 2000/36)**

(54) **DISPOSITIF DE MESURE DES DEPLACEMENTS D'UN OBJET MOBILE, NOTAMMENT DANS UN ENVIRONNEMENT HOSTILE**

VORRICHTUNG ZUM MESSEN VON VERSCHIEBUNGEN EINES MOBILEN OBJEKTES, INSBESONDERE IN EINER FEINDLICHEN UMGEBUNG

DEVICE FOR MEASURING THE MOVEMENTS OF A MOVING OBJECT ESPECIALLY IN A HOSTILE ENVIRONMENT

(84) Etats contractants désignés:
**AT BE CH CY DE DK ES FI GB GR IE IT LI LU MC NL PT SE**

(30) Priorité: **04.03.1999 FR 9902702**

(43) Date de publication de la demande:
**05.12.2001 Bulletin 2001/49**

(73) Titulaire: **CENTRE NATIONAL D'ETUDES SPATIALES
75001 Paris (FR)**

(72) Inventeurs:
 • **AGNANI, Jean-Benoît, Laurent
 F-78470 Saint Remy Les Chevreuse (FR)**
 • **BEYER, Jean-Claude
 F-91210 Draveil (FR)**
 • **PATIN, Bruno, Pierre, Marie
 F-92260 Fontenay aux Roses (FR)**

 • **ROBERT, Eric
 F-91940 Les Ulis (FR)**

(74) Mandataire: **Colas, Jean-Pierre
 Cabinet JP Colas
 37, avenue Franklin D. Roosevelt
 75008 Paris (FR)**

(56) Documents cités:
 **EP-A- 0 580 139          EP-A- 0 834 748
 US-A- 4 638 320          US-A- 5 457 466**

 • **JONDRAL F ET AL: "RADIO DIRECTION FINDING IN TDMA SYSTEMS" , DE,BONN: DGON, PAGE(S) 393-401 XP000781814 * Alinéa: "RDF Using an Interferometer" , page 393 - page 395 ; figure 2 * * Alinéa: "Radio Location", page 395 ; figure 3 ***

EP 1 159 634 B1

**Description**

La présente invention est relative à un dispositif de mesure des déplacements d'un objet mobile, notamment dans un environnement hostile et, plus particulièrement, à un tel dispositif appliqué au suivi des déplacements d'une fusée à partir de son décollage.

On connaît des fusées, telles que des lanceurs de satellites ou de véhicules spatiaux par exemple, qui décollent d'une plate-forme de lancement équipée de divers équipements ou structures adjacents au lanceur lui-même. Il en est ainsi, en particulier, de la plate-forme de lancement du lanceur Ariane 5, conçu, développé et construit par le Centre National d'Etudes Spatiales et l'Agence Européenne de l'Espace, qui comporte des conduits d'évacuation des gaz accueillant la tuyère du premier étage cryogénique de ce lanceur et celles des deux propulseurs auxiliaires à poudre montés sur cet étage. Lors du décollage du lanceur, les tuyères doivent évidemment sortir de leurs puits respectifs sans risques de toucher les parois des puits, du fait d'un écart latéral de la trajectoire du lanceur par rapport à sa trajectoire verticale nominale. On est alors conduit, pour des raisons de sécurité, à sous-dimensionner le diamètre maximal des tuyères afin de minimiser ces risques, ceci au détriment des poussées délivrées par ces propulseurs.

Une connaissance précise des déplacements du lanceur dans les premières secondes de son décollage permettrait de maximiser le diamètre de chaque tuyère par rapport à celui du puits qui l'accueille, et donc de maximiser la puissance développée par chaque propulseur, pour un diamètre de conduits d'évacuation des gaz donné.

Compte tenu des déformations relatives des divers constituants du lanceur, résultant d'effets de poussée et de pression, de la mise en froid de l'étage cryogénique et des degrés de liberté de certaines pièces mécaniques, une mesure précise de ces déplacements exige que les moyens de mesure soient disposés en partie basse du lanceur.

Divers dispositifs ont été envisagés pour mesurer ces déplacements, en particulier un dispositif comprenant des dérouleurs de fils accrochés au lanceur et des moyens de mesure en continu des longueurs des fils déroulés, suivant plusieurs directions de l'espace. On a aussi proposé l'utilisation d'un enregistrement vidéo d'images du lanceur au décollage et d'un traitement des images enregistrées révélant les déplacements du lanceur, ou encore l'utilisation d'émetteurs infrarouges ou ultrasonores fixés sur le lanceur et de moyens de détection des mouvements de ces émetteurs. On a également pensé à utiliser des données de trajectoire fournies par la centrale de guidage inertiel du lanceur. L'utilisation d'un émetteur de rayonnement laser à argon, associé à des réflecteurs appropriés, a aussi été envisagée.

Ces divers dispositifs s'avèrent à l'analyse non satisfaisants dans l'environnement très hostile où ils sont plongés au décollage du lanceur, du fait des énormes dégagements de produits divers (fumées, vapeurs, poudre d'aluminium, etc...) à la base du lanceur, provoqués par l'allumage des propulseurs et des rayonnements thermiques, acoustiques, optiques, notamment, très puissants qui sont associés à ces dégagements.

La présente invention a donc pour but de réaliser un dispositif de mesure des déplacements d'un objet mobile tel qu'un lanceur de satellites ou de véhicules spatiaux, propre à fournir une mesure précise des déplacements de la base d'un tel lanceur dans l'environnement hostile qui règne autour de cette base, dans les quelques secondes qui suivent le décollage du lanceur.

On atteint ce but de l'invention, ainsi que d'autres qui apparaîtront à la lecture de la description qui va suivre, avec un dispositif de mesure des déplacements d'un objet mobile, à partir d'une position initiale prédéterminée, caractérisé en ce qu'il comprend :

a) au moins un émetteur d'une fréquence radioélectrique, solidaire dudit objet,

b) au moins une base de réception sensible à ladite fréquence radioélectrique et comprenant une paire d'antennes disposées dans des positions fixes à une distance prédéterminée l'une de l'autre, pour délivrer des signaux électriques représentatifs des signaux radioélectriques reçus et des moyens interférométriques alimentés par lesdits signaux électriques pour fournir continûment une mesure de la position courante dudit émetteur, depuis le départ dudit mobile de ladite position initiale prédéterminée.

Comme on le verra plus loin en détail, la mesure des déplacements du mobile par interférométrie d'ondes radioélectriques proposée par la présente invention permet de suivre avec une grande précision les déplacements du mobile, y compris quand celui-ci est plongé dans l'environnement hostile décrit ci-dessus.

Suivant un mode de réalisation préféré de l'invention, le dispositif comprend des première et deuxième bases de réception disposées dans un même plan, lesdits moyens interférométriques délivrant une mesure de la position de la projection dudit émetteur dans ledit plan. Il comprend en outre une troisième base de réception formée d'antennes alignées sur un axe perpendiculaire audit plan pour délivrer une mesure de la position de la projection dudit émetteur sur ledit axe.

Dans son application au suivi de la position d'une fusée décollant sensiblement verticalement d'une plate-forme horizontale, le dispositif comprend un deuxième émetteur d'une deuxième fréquence radioélectrique distincte de celle émise par le premier émetteur, ledit deuxième émetteur étant monté sur ladite fusée en un point distant horizontalement du point de montage du premier émetteur, ledit deuxième émetteur étant associé, comme le premier, à trois bases de réception de ladite deuxième fréquence radioélectrique et à des moyens interférométriques de traitement des signaux délivrés par lesdites bases de réception pour délivrer une mesure de la position dudit deuxième émetteur après le décollage de la fusée.

D'autres caractéristiques et avantages de la présente invention apparaîtront à la lecture de la description qui va suivre et à l'examen du dessin annexé dans lequel :

- la figure 1 est un schéma illustrant le principe de la mesure interférométrique mise en oeuvre par le dispositif suivant l'invention,
- la figure 2 illustre le positionnement du ou des émetteurs formant partie du dispositif suivant l'invention, sur un objet mobile constitué, à titre d'exemple seulement, par le lanceur Ariane 5 précité,
- la figure 3 est une vue en plan de l'agencement des émetteurs et bases de réception du dispositif suivant l'invention, installés sur une plate-forme de lancement du lanceur représenté à la figure 2,
- la figure 4 est une vue en plan du dispositif suivant l'invention, et
- la figure 5 est une schéma fonctionnel des moyens de traitement de signaux formant partie du dispositif suivant l'invention.

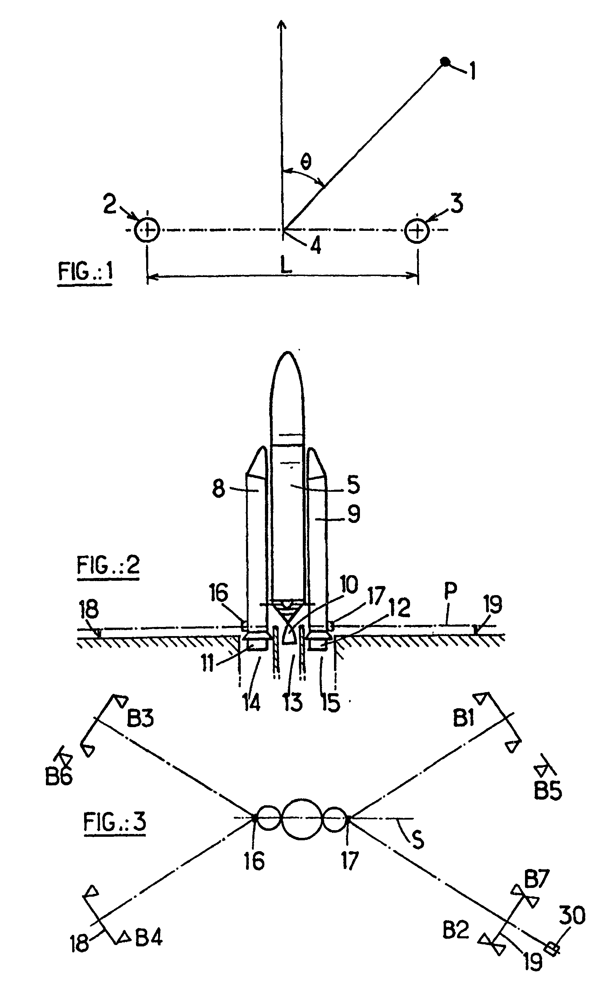

On se réfère à la figure 1 du dessin annexé pour exposer brièvement le principe de la mesure interférométrique mise en oeuvre dans le dispositif suivant l'invention.

On a représenté en 1 un émetteur mobile d'ondes radioélectriques présentant une fréquence prédéterminée correspondant à une longueur d'onde λ. Deux antennes fixes 2 et 3 réceptrices d'ondes radioélectriques, de tout type convenable, sont disposées à une distance L l'une de l'autre, dans le champ de rayonnement de l'émetteur 1 mobile, par hypothèse, dans le plan passant par cet émetteur et les antennes 2,3. La direction de l'émetteur 1 est repérée par son angle θ avec la normale, dans le plan défini ci-dessus (le plan de la figure 1) au segment de droite délimité par les positions des récepteurs 2 et 3, en son milieu 4.

Les deux antennes 2,3 permettent de constituer ainsi une "base de réception" qui délivre des signaux électriques à la fréquence de celle de l'émetteur 1. On démontre que la phase φ du signal émis par l'antenne 3, choisie comme antenne de mesure, par rapport au signal de l'antenne 2 "de référence", est donnée approximativement par la relation :

$$\varphi = \frac{2\pi L \cdot \sin\,\theta}{\lambda}$$

Ainsi, une mesure de cette phase φ permet de calculer l'angle θ et donc la direction de l'émetteur 1.

On ne repère ainsi que la direction de l'émetteur, et non sa position sur cette direction. On comprend cependant qu'en relevant la position de l'émetteur 1 à l'aide de deux bases de réception au lieu d'une, on localise cette position, à l'intersection de deux directions détectées chacune par l'une des deux bases de réception. C'est ce principe de suivi de la position de l'émetteur que met en oeuvre le dispositif suivant la présente invention.

On se réfère maintenant aux figures 2 à 4 du dessin annexé pour décrire la structure et le fonctionnement du dispositif selon l'invention.

A la figure 2, on a représenté une vue schématique en élévation du lanceur Ariane 5, choisie à titre d'exemple illustratif et non limitatif seulement, le dispositif suivant l'invention étant adaptable à tout lanceur, fusée ou autre mobile, comme cela découlera à l'évidence de la suite de la présente description.

Sur cette figure 2, il apparaît que le lanceur représenté comprend, comme il est bien connu, un premier étage cryogénique 5 et deux propulseurs auxiliaires 8,9 à poudre, fixés sur l'enveloppe du premier étage.

A la partie inférieure de ce dernier, on trouve une tuyère 10 d'éjection de gaz. De même, les propulseurs auxiliaires 8,9 sont équipés de tuyères 11,12 respectivement.

Lorsque le lanceur est monté sur sa plate-forme de lancement, une ou plusieurs de ces tuyères 10,11,12 peuvent être logées dans des conduits d'évacuation des gaz tels que 13,14,15 respectivement, comme représenté à la figure 2, ces conduits permettant l'évacuation à distance des produits de combustion des propergols utilisés.

Comme on l'a vu plus haut, c'est le but de la présente invention que de mesurer précisément les déplacements du lanceur après la mise à feu de l'étage cryogénique 5 et des propulseurs auxiliaires 8,9, de manière à permettre d'optimiser le dimensionnement des tuyères tout en évitant tout risque de contact entre ces tuyères et leurs conduits d'évacuation des gaz respectifs, pendant la sortie des tuyères de ces conduits.

Comme on l'a vu plus haut, l'utilisation d'un seul émetteur et d'une seule base de réception permet de suivre les évolutions d'une direction passant par l'émetteur, dans un plan défini par cet émetteur et la paire d'antenne. L'utilisation d'une deuxième base de réception permet de suivre la position de l'émetteur dans ce plan.

Dans certaines applications de l'invention au suivi d'objets mobiles dont les déplacements sont limités, le dispositif suivant l'invention pourra présenter une structure de base simple, telle que l'une des deux structures évoquées ci-dessus.

D'une manière générale, la position d'un solide dans un espace à trois dimensions étant définie par celle de trois points non alignés du solide, le dispositif suivant l'invention devrait comprendre trois émetteurs fixés sur l'objet solide et mobile à suivre, chaque émetteur étant associé à trois bases de réception disposées de manière à délivrer des signaux propres à calculer les coordonnées des trois émetteurs, suivant trois directions de l'espace.

Dans l'application particulière de la présente invention au suivi des déplacements d'un lanceur tel qu'Ariane 5, pendant les quelques secondes suivant son décollage qui sont nécessaires pour que les tuyères 10,11,12 des propulseurs sortent de leurs puits respectifs 13,14,15, deux émetteurs suffisent, comme on l'explique ci-dessous.

Sur les schémas des figures 2 et 3, il apparaît que ces deux émetteurs 16 et 17 sont disposés à la base des propulseurs à poudre 8,9, au-dessus des tuyères 11,12 respectivement, dans un plan de symétrie S du lanceur passant par les trois axes longitudinaux du premier étage 5 et des propulseurs auxiliaires 8,9 respectivement, et dans un plan P horizontal.

A chaque émetteur 16,17 sont associées trois bases de réception, permettant de mesurer les déplacements de l'émetteur dans l'espace, après la mise à feu du lanceur.

C'est ainsi que des bases $B_3$ et $B_4$ sont disposées symétriquement par rapport au plan S, dans le plan P, pour mesurer la position de la projection de l'émetteur 16 dans un plan horizontal, alors qu'une base $B_6$, composée de deux antennes alignées sur un axe vertical, permet de mesurer la position de la projection de l'émetteur sur ledit axe, soit l'altitude de l'émetteur 16.

Les bases $B_1$,$B_2$ et $B_5$ jouent des rôles identiques à ceux des bases $B_3$,$B_4$,$B_6$ respectivement, pour l'émetteur 17.

En espaçant suffisamment les bases $B_1$ à $B_4$ par rapport au lanceur, on comprend que le plan défini par un émetteur et les deux bases qui lui sont associées dans le plan P, s'écarte assez peu de ce plan P pendant les premières secondes du décollage du lanceur.

Comme schématisé à la figure 2, les bases B1 à B6 sont supportées par des portiques tels que 18,19, au-dessus de la surface de la plate-forme.

On comprend que le dispositif suivant l'invention permet de surveiller la position du segment de droite défini par les positions des émetteurs 16,17 et en particulier une rotation de ce segment dans un plan horizontal, rotation qui pourrait provoquer des chocs entre les tuyères 10,11,12 et les puits 13,14,15 desquels ces tuyères sortent pendant le décollage du lanceur.

On notera, en particulier, qu'en disposant les deux émetteurs 16,17 comme représenté, en deux points écartés horizontalement d'une distance maximale, on maximise la sensibilité de la détection de cette rotation.

Dès que les tuyères sont sorties de leurs conduits d'évacuation des gaz respectifs, cette surveillance devient inutile, soit dès que le lanceur s'est élevé de quelques mètres. Pendant cette courte course, une éventuelle rotation du lanceur autour d'un axe passant par les positions des émetteurs 16,17 aurait une très faible amplitude, négligeable en ce qui concerne le problème de la détection d'un risque de choc tuyère/puits. C'est pourquoi la présence d'un troisième émetteur sur le lanceur n'est pas nécessaire dans l'application décrite ci-dessus du dispositif suivant l'invention.

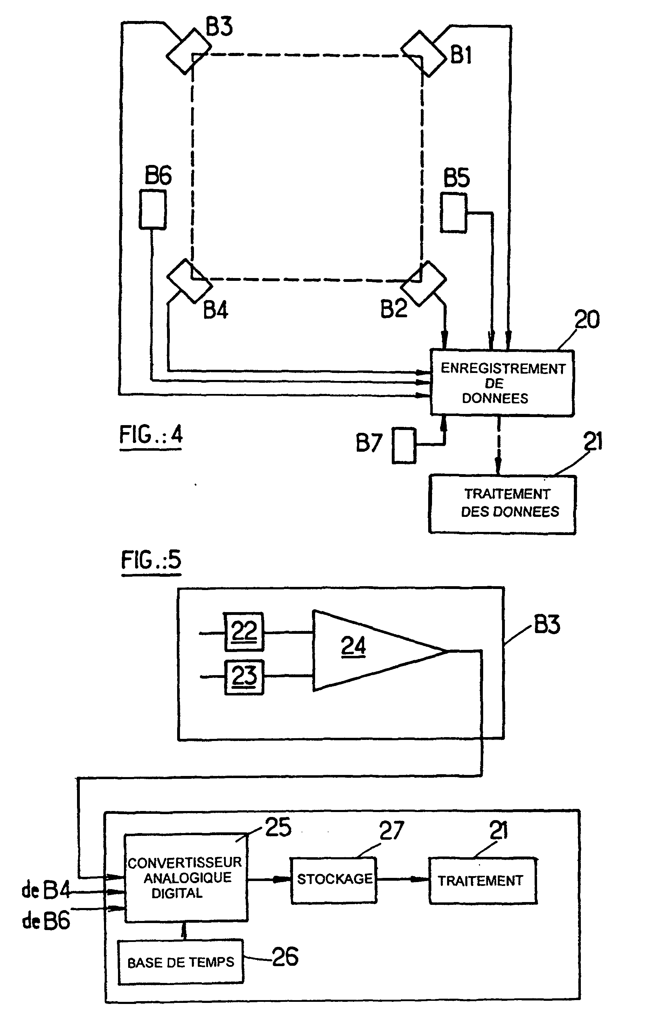

Les signaux délivrés par les antennes des bases B1 à B6 sont délivrés, comme représenté à la figure 4, à un poste central d'enregistrement de données 20, avant d'être retransmis à un autre poste central 21 de traitement de ces données à distance.

Le schéma fonctionnel de la figure 5 fait apparaître les principales étapes du traitement des signaux délivrés par les bases. On a schématisé à la figure 5 le traitement des signaux délivrés par les bases $B_3$,$B_4$,$B_6$ associées à l'émetteur 17, seulement, le traitement des signaux délivrés par les bases $B_1$,$B_2$,$B_5$ étant identiques.

C'est ainsi que dans chacune des bases $B_3$, $B_4$,$B_6$, les signaux délivrés par les antennes sont traités par des moyens interférométriques (22,23,24) de manière à être conformés en 22,23 puis traités dans un comparateur de phase 24 qui délivre un signal représentatif d'un angle tel que l'angle $\theta$ présenté en liaison avec la figure 1. Après numérisation dans un convertisseur analogique-numérique 25 commandé par une base de temps 26, les trois signaux sont enregistrés en 27 pour pouvoir être ensuite traités, par exemple à distance, de manière à en tirer les trajectoires suivies par les tuyères pendant leurs sorties de leurs puits respectifs. L'espace nécessaire à une sortie sans choc des tuyères de leurs conduits d'évacuation des gaz est alors déterminé et les diamètres des tuyères optimisés en conséquence.

Très avantageusement, la mesure interférométrique des déplacements du lanceur à partir d'ondes radioélectriques, suivant la présente invention, permet d'échapper à tous les inconvénients qui affectent les dispositifs évoqués en préambule de la présente description, lorsque ces dispositifs sont plongés dans des environnements hostiles tels que celui d'un lanceur en cours de décollage. Par un choix convenable de leur fréquence, on peut rendre les ondes radioélectriques quasi insensibles, en effet, à tout brouillage par les puissants dégagements de gaz et de vapeurs ainsi que par les forts rayonnements thermiques, optiques, acoustiques qui se développent alors dans cet environnement.

Le rapport signal/bruit des mesures réalisées étant alors élevé, on obtient des mesures de grande précision. C'est ainsi qu'avec des émetteurs 16 et 17 opérant à des fréquences fixes différentes en bande X pour éviter toute interférence, quatre bases réceptrices $B_1$ à $B_4$ disposées à environ 30 mètres du lanceur, les deux antennes de chaque base étant disposées à 3 mètres l'une de l'autre, on a pu mesurer la trajectoire de chaque émetteur avec une précision de $\pm$ 5 mm sur les deux premiers mètres de cette trajectoire, parcourue en 1,3 seconde environ. On a pu aussi mesurer l'altitude du lanceur jusqu'à 5 mètres.

Dans le domaine principal d'altitude considéré (0-2 mètres), l'influence de cette altitude sur la précision des mesures de la position des émetteurs est négligeable.

Comme on l'a vu plus haut, les antennes des bases $B_1$ à $B_4$ sont montées sur des portiques (voir figure 2). Au décollage, ceux-ci sont susceptibles de vibrer sous les efforts qui leur sont appliqués par les gaz et vapeurs s'échappant des tuyères des fusées, ces vibrations faussant alors les mesures réalisées.

Suivant la présente invention, on tient compte de ces vibrations en mesurant celles-ci à l'aide d'un émetteur d'ondes radioélectriques 30 (voir figure 3) analogue aux émetteurs 16,17, l'émetteur 30 étant solidement fixé sur un support anti-vibrations et en mesurant les vibrations d'un des portiques, par exemple le portique 19 (voir figure 3), à l'aide d'une base de réception $B_7$ montées sur ce portique. On tire de cette mesure un signal permettant de corriger les mesures réalisées à l'aide des autres bases, de manière à rendre ces mesures indépendantes des vibrations des portiques.

On observera toutefois que, dans certaines situations, en particulier lorsque ces vibrations sont orientées perpendiculairement à l'axe de la base concernée, les influences de ces vibrations sur les mesures réalisées peuvent se contrarier et donc s'annuler mutuellement, ce qui rend toute correction inutile.

Bien entendu, l'invention n'est pas limitée au mode de réalisation décrit et représenté qui n'a été donné qu'à titre d'exemple. C'est ainsi que d'autres configurations d'émetteurs et d'antennes, et d'autres fréquences, pourront être envisagées par l'homme de métier, sans que l'on s'écarte de la présente invention, pour autant que l'on conserve le procédé de mesure interférométrique d'ondes radioélectriques décrit ci-dessus.

De même, l'invention n'est pas limitée au suivi des évolutions d'une fusée ou d'un lanceur spatial dans les secondes qui suivent son décollage. Elle s'étend au contraire au suivi de tout objet mobile quittant une position de repos, tel que par exemple, un siège éjectable d'aéronef en essais.

**Revendications**

1. Dispositif de mesure des déplacements d'un objet mobile sur une trajectoire initiale quasi-rectiligne, notamment dans un environnement hostile, à partir d'une position initiale prédéterminée, comprenant :

   a) au moins un émetteur (16) d'une fréquence radioélectrique prédéterminée, solidaire dudit objet,
   b) des première et deuxième bases de réception ($B_3,B_4$) sensibles à ladite fréquence radioélectrique et comprenant chacune une paire d'antennes disposées dans des positions fixes d'un même plan, à une distance (L) prédéterminée l'une de l'autre, pour délivrer des signaux électriques représentatifs des signaux radioélectriques reçus et des moyens interférométriques (22,23,24) alimentés par lesdits signaux électriques pour fournir continûment une mesure de la position courante de la projection dudit émetteur dans ledit plan, depuis le départ dudit mobile de ladite position initiale prédéterminée,

   **caractérisé en ce qu'**il comprend une troisième base ($B_6$) de réception comprenant des antennes alignées sur un axe perpendiculaire audit plan pour délivrer une mesure de la position de la projection dudit émetteur sur ledit axe.

2. Dispositif conforme à la revendication 1, **caractérisé en ce que** ledit axe est vertical.

3. Dispositif conforme à la revendication 2, appliqué au suivi de la position d'un objet mobile constitué par une fusée (5 à 9) décollant verticalement d'une plate-forme horizontale, **caractérisé en ce qu'**il comprend un deuxième émetteur (17) d'une deuxième fréquence radioélectrique distincte de celle émise par le premier émetteur (16), ledit deuxième émetteur (17) étant monté sur ladite fusée en un point distant horizontalement du point de montage du premier émetteur (16), ledit deuxième émetteur (17) étant associé, comme le premier, à trois bases ($B_1,B_2,B_5$) de réception de ladite deuxième fréquence radioélectrique et à des moyens interférométriques de traitement des signaux délivrés par lesdites bases de réception pour délivrer une mesure de la position dudit deuxième émetteur (17) après le décollage de la fusée.

4. Dispositif conforme à la revendication 3, **caractérisé en ce que** lesdits émetteurs (16,17) sont disposés dans un même plan (P) horizontal, en deux points de la fusée d'écartement maximal dans ledit plan.

5. Dispositif conforme à la revendication 4, appliqué à une fusée comportant au moins une tuyère (10;11; 12) disposée, avant décollage, dans un conduit d'évacuation des gaz (13;14;15) aménagé sur la plate-forme de lancement, **caractérisé en ce que** lesdits émetteurs (16,17) sont disposés sur ladite fusée, au voisinage de ladite tuyère (10;11;12).

6. Dispositif conforme à l'une quelconque des revendications 3 à 5, **caractérisé en ce que** lesdites bases de réception ($B_1$ à $B_6$) sont montées sur des portiques fixés sur la plate-forme de lancement et **en ce que** des moyens ($B_7$,30) sont prévus pour détecter les vibrations desdits portiques au décollage de la fusée et pour corriger les mesures opérées par lesdits moyens interférométriques en fonction desdites vibrations, lesdits moyens de détection (30, B7) comprenant un émetteur d'ondes radioélectriques (30) monté sur un support anti-vibration et une base de réception (B7), montée sur un desdits portiques, des signaux émis par ledit émetteur (30).

## Claims

1. A device for measuring the movements of a moving object over a virtually straight initial trajectory, especially in a hostile environment, starting from a predetermined initial position, comprising:

   a) at least one transmitter (16) of a predetermined radioelectric frequency, integral with said object,
   b) first and second receiving bases ($B_3$, $B_4$) sensitive to said radioelectric frequency and each comprising a pair of antennas disposed in fixed positions in a same plane, at a predetermined distance (L) from each other, in order to deliver electrical signals representative of the radioelectric signals received and interferometric means (22, 23, 24) fed by said electrical signals to provide continuously a measurement of the current position of the projection of said transmitter in said plane, from the departure of said moving object from said predetermined initial position,

   **characterized in that** it comprises a third receiving base ($B_6$) comprising antennas aligned on an axis perpendicular to said plane in order to deliver a measurement of the position of the projection of said transmitter on said axis.

2. The device as claimed in claim 1, **characterized in that** said axis is vertical.

3. The device as claimed in claim 2, applied to the tracking of the position of a moving object consisting of a rocket (5 to 9) taking off vertically from a horizontal pad,
   **characterized in that** it comprises a second transmitter (17) of a second radioelectric frequency distinct from the one transmitted by the first transmitter (16), said second transmitter (17) being mounted on said rocket at a point horizontally distant from the point at which the first transmitter (16) is mounted, said second transmitter (17) being associated, like the first one, with three receiving bases ($B_1$, $B_2$, $B_5$) of said second radioelectric frequency and with interferometric means for processing the signals delivered by said receiving bases in order to deliver a measurement of the position of said second transmitter (17) after the take-off of the rocket.

4. The device as claimed in claim 3, **characterized in that** said transmitters (16, 17) are disposed in a same horizontal plane (P) at two points of the rocket having a maximum separation in said plane.

5. The device as claimed in claim 4, applied to a rocket comprising at least one nozzle (10; 11; 12) disposed, before take-off, in a gas evacuation duct (13; 14; 15) installed on the launching pad, **characterized in that** said transmitters (16, 17) are disposed on said rocket, in the vicinity of said nozzle (10; 11; 12).

6. The device as claimed in any one of claims 3 to 5, **characterized in that** said receiving bases ($B_1$ to $B_6$) are mounted on gantries fixed on the launching pad and **in that** means ($B_7$, 30) are provided for detecting the vibrations of said gantries during the take-off of the rocket and for correcting the measurements made by said interferometric means according to said vibrations, said means of detection (30, B7) comprising a transmitter of radioelectric waves (30) mounted on an antivibration support and a receiving base (B7), mounted on one of said gantries, for receiving the signals transmitted by said transmitter (30).

## Patentansprüche

1. Vorrichtung zum Messen der Verschiebungen eines mobilen Objekts auf einer quasi-geradlinigen Initialbahn, insbesondere in einer feindlichen Umgebung, ausgehend von einer vorbestimmten Ausgangsposition, mit:

   a) mindestens einem Sender (16) für eine vorbestimmte Radiofrequenz, der fest mit dem Objekt verbunden ist,

   b) einer ersten und einer zweiten Empfangsbasis ($B_3$, $B_4$), die für die Radiofrequenz empfindlich sind und jeweils zwei in vorbestimmtem Abstand (L) voneinander angeordnete Antennen, die in zwei festen Positionen der selben Ebene angeordnet sind, um elektrische Signale auszugeben, welche empfangene Radiosignale wiedergeben, und interferometrische Einrichtungen (22, 23, 24) aufweisen, welche von den elektrischen Signalen gespeist werden, um vom Start des mobilen Objekts von der vorbestimmten Ausgangsposition an kontinuierlich eine Messung der aktuellen Position der Projektion des Senders in der genannten Ebene zu liefern,

   **dadurch gekennzeichnet, daß** die Vorrichtung eine dritte Empfangsbasis ($B_6$) mit Antennen aufweist, die auf eine zur genannten Ebene senkrechte Achse ausgerichtet sind, um eine Messung der Projektion des Senders auf diese Achse zu liefern.

2.   Vorrichtung nach Anspruch 1, **dadurch gekennzeichnet, daß** die Achse vertikal verläuft.

3.   Vorrichtung nach Anspruch 2, angewandt auf die Verfolgung der Position eines mobilen Objekts, das durch eine vertikal von einer horizontalen Plattform abhebenden Rakete (5 bis 9) gebildet ist, **dadurch gekennzeichnet, daß** die Vorrichtung einen zweiten Sender (17) für eine zweite Radiofrequenz aufweist, die von derjenigen, welche der erste Sender (16) sendet, verschieden ist, wobei der zweite Sender (17) an der Rakete an einem horizontal von der Montagestelle des ersten Senders (16) beabstandeten Punkt angebracht ist, wobei der zweite Sender (17), wie der erste Sender, drei Empfangsbasen ($B_1$, $B_2$, $B_5$) für die zweite Radiofrequenz und interferometrischen Einrichtungen zugeordnet ist, welche von den Empfangsbasen gelieferte Daten verarbeiten; um eine Messung der Position des zweiten Senders (17) nach dem Start der Rakete zu liefern.

4.   Vorrichtung nach Anspruch 3, **dadurch gekennzeichnet, daß** die Sender (16, 17) in der gleichen horizontalen Ebene (P) an zwei in der Ebene maximal beabstandeten Punkten der Rakete angeordnet sind.

5.   Vorrichtung nach Anspruch 4, angewandt auf eine Rakete mit wenigstens einer Düse (10; 11; 12), die vor dem Abheben in einer in der Startplattform ausgebildeten Gasableitung (13; 14; 15) angeordnet ist, **dadurch gekennzeichnet, daß** die Sender (16, 17) an der Rakete in der Nähe der Düse (10; 11; 12) angeordnet sind.

6.   Vorrichtung nach einem der Ansprüche 3 bis 5, **dadurch gekennzeichnet, daß** die Empfangsbasen ($B_1$ bis $B_6$) an auf der Startplattform angebrachten Stützen befestigt sind, und daß Einrichtungen ($B_7$, 30) zum Erkennen der Vibrationen der Stützen beim Abheben der Rakete und zum Korrigieren der von den interferometrischen Einrichtungen berechneten Messungen in Abhängigkeit von den Vibrationen vorgesehen sind, wobei die Erkennungseinrichtungen (30, $B_7$) einen auf einem Antivibrationsträger montierten Radiowellensender (30) und eine Empfangsbasis ($B_7$) aufweist, die an einer der genannten Stütze angebracht ist und die vom Sender (30) gesendeten Signale empfängt.

FIG.:1

FIG.:2

FIG.:3

FIG.:4

B3

B1

B6

B5

B4

B2

20

ENREGISTREMENT
DE
DONNEES

B7

21

TRAITEMENT
DES DONNEES

FIG.:5

22

23

24

B3

25

27

21

CONVERTISSEUR
ANALOGIQUE
DIGITAL

STOCKAGE

TRAITEMENT

de B4

de B6

BASE DE TEMPS

26